# FASCICULE DE BREVET EUROPEEN

(11) **EP 1 374 078 B1**
(45) Date de publication et mention de la délivrance du brevet: **29.11.2006**
(21) Numéro de dépôt: 02724388.0
(22) Date de dépôt: 28.03.2002
(51) Int. Cl.: G06F 15/02, G07C 5/08

(54) **SYSTEME AUTOMATISE D'EDITION ET DE GESTION DE CONTRAVENTIONS**
AUTOMATISCHES SYSTEM ZUR ERSTELLUNG UND VERWALTUNG VON STRAFZETTELN
AUTOMATED SYSTEM FOR FILLING IN AND DELIVERING OFFENCE TICKETS

(30) Priorité: 29.03.2001 FR 0104274
(43) Date de publication de la demande: 02.01.2004
(73) Titulaire: Grison, Paul, 06560 Valbonne (FR)
(72) Inventeur: Grison, Paul, 06560 Valbonne (FR)
(74) Mandataire: de Zeeuw, Johan Diederick
(86) Numéro de dépôt international: PCT/FR2002/001103
(87) Numéro de publication internationale: WO 2002/079894

(56) Documents cités:
- WO-A-97/14116
- FR-A- 2 771 530
- GB-A- 2 284 290
- DATABASE EPODOC [en ligne] EUROPEAN PATENT OFFICE, THE HAGUE, NL; DE SANTIS: "Portable electronic device especially suitable for detection and documentation of traffic violations" XP002214087 & IT 1 253 981 B (DE SANTIS) 5 septembre 1995 (1995-09-05)
- PATENT ABSTRACTS OF JAPAN vol. 012, no. 383 (P-770), 13 octobre 1988 (1988-10-13) & JP 63 128472 A (TOSHIBA CORP;OTHERS: 01), 1 juin 1988 (1988-06-01)

## Description

### Domaine technique

La présente invention concerne l'établissement et le paiement des contraventions dressées par les agents de police préposés au stationnement aux véhicules en stationnement illicite sur la voie publique ou en infraction, et en particulier un système automatisé d'édition et de gestion de ces contraventions.

### Etat de la technique

Actuellement, dans la plupart des pays, la verbalisation par un policier ou contractuel des véhicules stationnant sur la voie publique se fait en remplissant manuellement un bordereau en papier à l'aide d'informations relatives à la date, l'heure, le lieu du stationnement ainsi que les informations relatives au véhicule telles que le numéro d'immatriculation, la marque, etc. Une fois rempli, le bordereau est glissé sous l'essuie-glace du véhicule. Muni de ce document, le possesseur du véhicule en infraction, soit s'acquitte de la contravention en achetant un timbre amende dans un bureau de tabacs, timbre amende qui est collé sur le bordereau avant que celui-ci soit transmis au trésor public comme c'est le cas en France, soit effectue le paiement en se rendant directement dans une poste, un commissariat de police ou au service des impôts comme c'est le cas dans la plupart des autres pays.

Ce système présente en fait plusieurs inconvénients. En particulier, le policier qui dresse la contravention a un travail fastidieux et long puisqu'il doit'inscrire à la main toutes les informations du bordereau en double sur la souche de son carnet de contraventions, ce qui lui prend un temps considérable au détriment d'une réelle efficacité. De plus, le traitement administratif des bordereaux de contravention est très lourd à gérer.

Un autre inconvénient majeur provient du fait que le bordereau de contravention est glissé sous l'essuie-glace du véhicule. S'il pleut après que le bordereau a été placé sur le pare-brise du véhicule, le bordereau est alors mouillé, parfois détrempé, désagréable à manipuler, et souvent altéré ce qui le rendra inexploitable pour le paiement ultérieur. En outre, les bordereaux de contravention étant simplement glissés sous l'essuie glace sont quelquefois subtilisés par jeu ou retirés du véhicule en infraction par des automobilistes indélicats qui les placent sous les essuie-glace de leur propre véhicule pour éviter qu'un policier ne leur dresse une contravention, croyant que le véhicule en infraction a déjà été verbalisé. Ainsi, dans ce cas, l'automobiliste en infraction n'en ayant pas eu connaissance, ne s'acquitte donc pas de la contravention et aura à payer un montant plus élevé lorsqu'elle lui sera réclamée ultérieurement aggravant de ce fait un volume de contestations important.

Un système de traitement des contraventions décrit dans la demande de brevet FR-A-2.665.779 permet de remédier partiellement aux inconvénients cités ci-dessus, grâce à l'utilisation d'un terminal autonome portable pourvu d'un clavier alphanumérique, d'un écran et d'une imprimante adaptée à l'impression d'un code-barre sur un procès-verbal de contravention entré par le policier au moyen du clavier. Malheureusement, dans la mesure où le système décrit dans le document FR-A-2.665.779 utilise toujours des bordereaux en papier ou autre matière altérable pour y inscrire les procès-verbaux, il existe toujours l'inconvénient que le bordereau soit rendu inexploitable en cas de pluie, ou que le bordereau soit retiré du véhicule en infraction pour être placé sur un autre véhicule, ou encore que les codes-barre soient falsifiés par un contrevenant qui veut s'en donner la peine par retrait ou ajout de barres, générant ainsi des possibilités de manipulation inconcevables dans ce domaine sensible d'application, dont l'exploitation doit reposer sur une fiabilité et une sécurité totale.

Le système décrit dans la demande de brevet PCT FR98/02509 permet de pallier les inconvénients précités en utilisant comme support de contravention une carte à puce inaltérable et infalsifiable qui est clippée sur l'essuie-glace du véhicule en infraction après que l'agent de police y a enregistré les informations relatives à l'infraction. Pour ce faire, il utilise un dispositif de saisie portable dans lequel il enregistre toutes les contraventions qu'il distribue au cours de son service. A la fin de son service, l'agent de police se rend au commissariat où il connecte le dispositif de saisie à un terminal d'acquisition de données au moyen duquel les données relatives aux contraventions enregistrées sont automatiquement transmises au centre de traitement. Malheureusement, ce système présente l'inconvénient majeur de ne transmettre les contraventions au centre de traitement qu'à la fin du service de l'agent de police, soit quelquefois plusieurs heures après leur enregistrement. L'agent de police ne peut donc pas savoir si le véhicule en infraction est un véhicule volé au moment de l'infraction. En outre, en cas de perte ou de vol du dispositif de saisie, les données relatives aux contraventions enregistrées sont définitivement perdues.

Le système décrit dans la demande de brevet FR-A-2 771 530 divulgue les caractéristiques du préambule de la revendication 1.

### Exposé de l'invention

C'est pourquoi le but de l'invention est de fournir un système d'édition et de gestion des contraventions dans lequel l'agent de police a accès en temps réel par liaison hertzienne aux informations relatives au véhicule et dans lequel les données relatives à l'infraction sont enregistrées immédiatement au centre de traitement des contraventions.

L'objet de l'invention est exposé dans la revendication 1. Il s'agit d'un système d'édition et de gestion de contraventions comprenant un dispositif de saisie portable à la disposition de l'agent de police chargé de dresser une contravention à un véhicule en infraction pour y enregistrer les informations relatives au véhicule, un support d'informations sans limitation de forme ou de matériau, muni d'un microcircuit, et qui est de préférence une carte à puce sans contact inaltérable et infalsifiable destinée à être remise au possesseur du véhicule et adaptée pour être présentée devant le dispositif de saisie de façon à y enregistrer les informations relatives au véhicule saisies à partir du dispositif de saisie sous la commande de l'agent de police, des moyens de clippage permettant à l'agent de police de clipper la carte sur le bras d'essuie-glace de sorte que la carte ne soit pas détériorée par la pluie et ne puisse pas être aisément retirée après avoir été clippée, un dispositif de consultation disposant d'un écran d'affichage, d'une imprimante et d'un moyen de lecture de la carte sans contact de façon à permettre au possesseur du véhicule de prendre connaissance et de faire imprimer les informations relatives à l'infraction affichées sur l'écran d'affichage, un centre de traitement contenant les informations relatives à tous les véhicules en circulation, et des moyens de transmission par liaison hertzienne se trouvant dans le dispositif de saisie pour permettre à l'agent de police d'obtenir les informations relatives au véhicule en infraction à partir du centre de traitement après avoir transmis par liaison hertzienne le numéro d'immatriculation du véhicule en infraction au centre de traitement.

### Brève description de dessins

Les buts, objets et caractéristiques de l'invention ressortiront plus clairement à la lecture de la description qui suit faite en référence aux dessins dans lesquels :
la figure 1 est un bloc-diagramme représentant schématiquement tous les éléments du système d'édition et de gestion des contraventions selon l'invention,
la figure 2 est un organigramme représentant les opérations à effectuer dans le système selon l'invention illustré sur la figure 1,
les figures 3A et 3B représentent un premier mode de réalisation de la carte de contravention sans contact utilisée dans le système selon l'invention, et
les figures 4A et 4B représentent un deuxième mode de réalisation de la carte de contravention sans contact utilisée dans le système selon l'invention.

### Description détaillée de l'invention

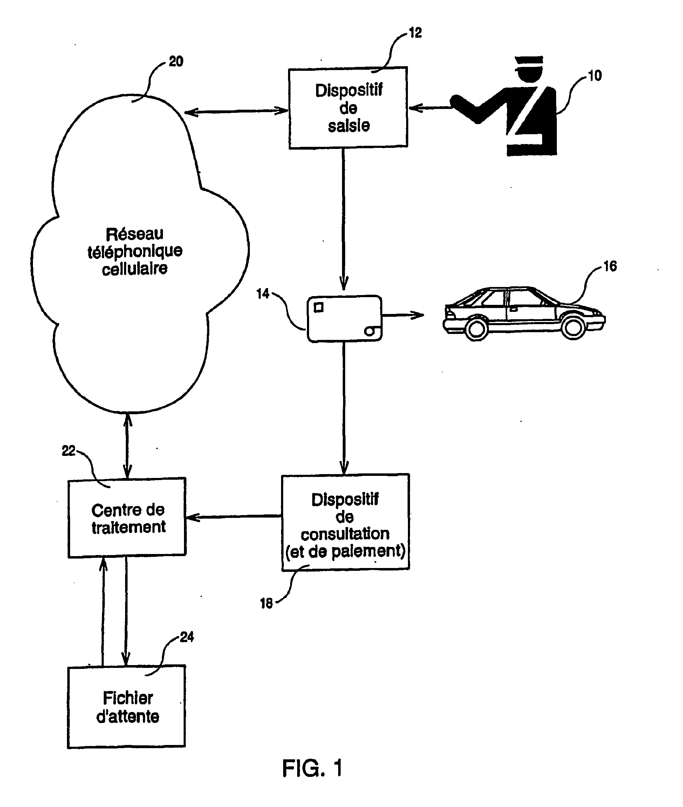

Comme illustré schématiquement sur la figure 1, l'agent de police (ou le contractuel) 10 chargé du stationnement a à sa disposition un dispositif de saisie 12 disposant d'un module permettant la transmission par liaison hertzienne et pouvant disposer d'un module GPS permettant de localiser automatiquement où se trouve le dispositif de saisie. Ce dernier permet à l'agent de police de délivrer à tout véhicule en infraction 16 une carte de contravention 14 qui est une carte clippable du type carte à puce sans contact, cette carte de contravention inaltérable et infalsifiable constituant l'élément essentiel du système d'édition et de gestion selon l'invention. Le dispositif de saisie 12 se présente sous forme d'un boîtier de dimensions réduites par exemple 15cm de longueur, 10cm de largeur et 2cm d'épaisseur. Il est équipé de moyens à reconnaissance vocale (matériel et logiciel), d'un écran, d'une carte de support des composants électroniques, d'une batterie rechargeable, d'un horodateur et d'un lecteur/enregistreur de cartes à puce sans contact du type de la carte 14. Il permet le calcul d'algorithmes complexes de sécurisation en complémentarité avec ceux de la carte 14 et d'écrire les certificats correspondants.

A noter que la carte à puce sans contact utilisée dans la présente invention est de loin préférable à la carte à puce à contact qui pourrait être aussi utilisée, dans la mesure où une carte à contact obligerait à munir le dispositif de saisie portable d'une fente d'introduction de ladite carte. Le dispositif de saisie étant utilisé à l'extérieur l'humidité ou les poussières entreraient facilement dans la fente du dispositif portable ce qui endommagerait les contacts du dispositif et pourrait le rendre rapidement indisponible.

La carte à puce 14 sans contact en plastique ou plastifiée est rendue infalsifiable par l'utilisation d'algorithmes complexes et le stockage d'informations dans des zones inviolables. De préférence, c'est une carte à puce sans contact, jetable, non réutilisable, totalement protégée et non duplicable, seule capable d'assurer la sécurité totale du traitement des données.

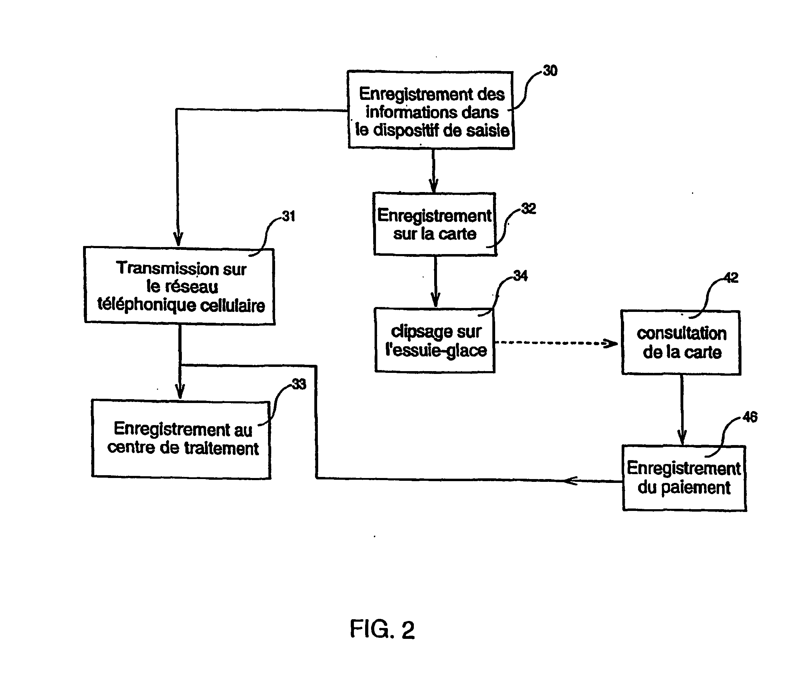

Le fonctionnement du système selon l'invention illustré sur la figure 1 se présente selon l'organigramme représenté sur la figure 2.

Tout d'abord, au début de son service, l'agent de police s'identifie en présentant sa carte personnelle d'identification sans contact devant le terminal de saisie. Quand ensuite l'agent de police veut procéder à une verbalisation, il entre simplement le numéro d'immatriculation du véhicule à l'aide de moyens à reconnaissance vocale dans son dispositif de saisie. Celui-ci étant équipé d'un module adapté, le numéro d'immatriculation est automatiquement transmis par liaison hertzienne 20 vers un centre de traitement des contraventions 22. Ce dernier étant connecté notamment au fichier des cartes grises, le centre de traitement localise immédiatement le véhicule correspondant au numéro d'immatriculation. Les caractéristiques du véhicule (type, marque, etc...) sont alors retransmises instantanément et enregistrées dans le dispositif de saisie sauf si le véhicule est déclaré avoir été volé. Dans ce cas, la verbalisation n'est pas effectuée et la localisation du véhicule est signalée automatiquement au centre de traitement 22.

Lorsque le numéro d'immatriculation est entré par l'agent de police dans le dispositif de saisie, le module GPS (lorsque le dispositif en est équipé) communique la position codée du dispositif de saisie au centre de traitement. Cette information est décodée et retransmise instantanément en clair vers le dispositif de saisie 12 en même temps que les informations sur le véhicule. Bien que l'agent de police pourrait entrer lui-même les informations relatives à la localisation, l'emploi du module GPS permet un enregistrement automatique et toujours exact de la localisation du véhicule par le centre de traitement, ce qui permet l'enregistrement automatique des véhicules volés par ce dernier.

En définitive, le dispositif de saisie enregistre les informations suivantes (étape 30) :
1. les données entrées par l'agent de police, à savoir le numéro d'immatriculation du véhicule et le type d'infraction,
2. les données fournies par le dispositif de saisie, à savoir la date et l'heure à la minute près et les articles de loi ou du décret relatifs au type d'infraction en cause,
3. les données reçues du centre de traitement, à savoir si le véhicule est signalé comme étant un véhicule volé, le type et la marque du véhicule, et la position GPS du véhicule.

Les informations ci-dessus enregistrées dans le dispositif de saisie sont alors d'une part, enregistrées (étape 32) sur la carte 14 que l'agent de police a présentée devant le dispositif de saisie 12 et d'autre part, transmises (étape 31) par liaison hertzienne 20 pour être enregistrées au centre de traitement 22 (étape 33). Une fois les données enregistrées sur la carte 14, l'agent de police la clippe sur l'essuie-glace du véhicule en infraction (étape 34) grâce à un moyen de clippage comme décrit ci-dessous.

Les informations enregistrées au centre de traitement 22 sont stockées automatiquement dans un fichier d'attente 24 pendant une certaine période de temps (3 ou 4 jours de préférence). L'accès à ce fichier d'attente est seulement autorisé à certaines personnes dûment habilitées telles que par exemple les commissaires de police. Ainsi, un commissaire de police peut décider de faire bénéficier un contrevenant d'une indulgence et faire retirer la contravention du fichier d'attente durant cette période de temps de stockage.

Quand le possesseur du véhicule est de retour à l'endroit du véhicule il récupère alors la carte 14 en la déclippant de l'essuie-glace et procède à sa consultation (étape 42) au moyen d'un dispositif de consultation 18 qui peut se trouver dans un bureau de tabacs ou dans un centre des impôts. Un tel dispositif comporte un écran d'affichage sur lequel s'affiche l'ensemble des informations relatives à l'infraction dès que la carte de contravention 14 sans contact est présentée devant le lecteur prévu à cet effet, et une imprimante éditant un document portant les mêmes informations. On doit noter que les dispositifs de consultation peuvent être également des bornes de consultation disposées sur la voie publique ou dans des endroits stratégiques tels que les stations service, les grandes surfaces, les parkings, etc.

Le dispositif de consultation 18 peut disposer de moyens pouvant servir au paiement de la contravention par le contrevenant (ou toute autre personne) muni de la carte de contravention. Dans le cas où ce paiement peut être effectué (étape 44), la personne chargée d'encaisser le règlement au bureau de tabacs ou au centre des impôts enregistre (étape 46) ce règlement au centre de traitement 22 au moyen du dispositif de consultation (et d'encaissement) 18 et un reçu est fourni à la personne effectuant le paiement. On doit noter que si le dispositif de consultation 18 est une borne, le paiement ne pourra se faire que par carte bancaire. Dans ce cas, un reçu est délivré par la borne et cette dernière transmet automatiquement l'information relative au paiement au centre de traitement 22.

Tous les encaissements effectués au moyen d'un dispositif de consultation (et d'encaissement) 18 sont transmis au centre de traitement. Dans ce cas, chaque règlement effectué par un des dispositifs de consultation et d'encaissement donne lieu à l'effacement dans le fichier d'attente 24 si ledit règlement est effectué durant la période de stockage. On doit noter que le rôle du centre de traitement 22 est, outre de recevoir les règlements des contraventions, de procéder aux relances et majorations en cas de retard de paiement et de traiter les demandes d'informations et les contestations.

Pour éviter d'être retirée trop facilement du pare-brise du véhicule en infraction, la carte de contravention est munie d'un moyen de clippage décrit ci-après.

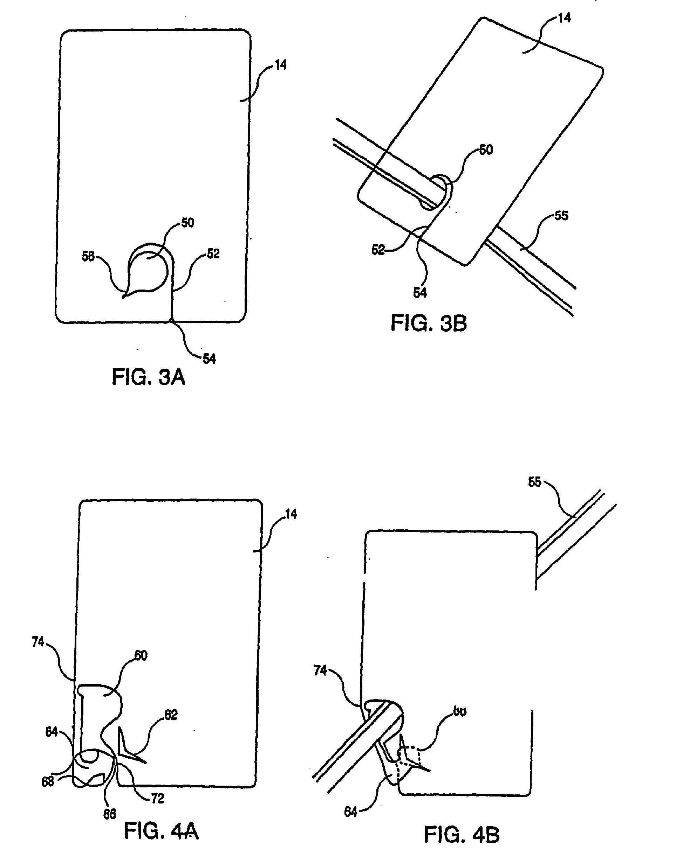

Selon un premier mode de réalisation non limitatif illustré sur les figures 3A et 3B, la carte de contravention 14 comporte un orifice 50 prolongé sur son côté d'une fente 52. Une découpe spéciale 54 est pratiquée à l'extrémité extérieure de cette fente sur le bord de la carte.

Le clippage se fait en appuyant la carte contre le bras de l'essuie-glace 55 au niveau de la découpe spéciale 54 qui facilite la séparation au droit de la fente 52 et l'introduction aisée par pivotement de la carte du bras de l'essuie-glace jusque dans l'orifice 50. La nature du matériau constitutif de ces cartes permet d'utiliser ses possibilités de déformation pour laisser passer le bras 55 de l'essuie-glace. La rigidité du matériau concrétise un clippage efficace sur le bras.

Pour désolidariser la carte 14 du bras 55, il suffit de tirer fortement sur la carte. En effet, l'encoche 56 crée une zone de faiblesse qui permet à la carte de se déchirer et de libérer ainsi la carte du bras de l'essuie-glace interdisant du même coup toute utilisation ultérieure du système de clippage de la carte.

Selon un second mode de réalisation illustré sur les figures 4A et 4B, la carte 14 comporte un orifice arrondi 60 et une fente en V triangulaire 62. Une partie pleine 64 en forme de flèche délimitant l'orifice arrondi 60 est constituée d'une pointe 66 et de deux barbillons 68. Le verrouillage du bras d'essuie-glace 70 dans l'orifice 60 se fait en entrant le bras d'essuie-glace entre la pointe 66 et le bord découpé 72 de la carte. Une fois dans l'orifice 60, la pointe 66 est introduite dans la fente en V triangulaire 62. La nature plastique de la carte permet d'utiliser ses possibilités de déformation pour laisser passer la flèche 64 dans la fente 62. Une fois la flèche 64 entrée complètement dans la fente 62, les barbillons 68 interdisent qu'elle ressorte de la fente du fait qu'en cas de traction, les barbillons 68 se bloquent dans le bas de la fente. La flexibilité du plastique lui permet de se déformer au droit de la partie prédécoupée 74 qui sert de point charnière.

Pour désolidariser la carte 14 du bras 70, il suffit de tirer fortement sur la carte. La partie charnière 74 constituant en même temps une zone de faiblesse grâce à sa découpe spéciale, se déchire et libère la carte du bras de l'essuie-glace interdisant du même coup toute utilisation ultérieure du système de clippage de la carte.

On doit noter qu'une caractéristique essentielle du système selon l'invention est l'utilisation des technologies de communication rapide. A ce titre, le système pourra utiliser les nouvelles technologies telles que GPRS et UMTS appelées à remplacer le système GSM ainsi que le système DAB.

Des perfectionnements peuvent être apportés au dispositif de saisie sans sortir du cadre de l'invention. Ainsi, il peut être muni d'un écran tactile et d'un clavier virtuel. En outre, le dispositif de saisie peut être équipé d'un lecteur d'empreintes et d'une mini-caméra qui permettra de filmer ou de photographier une personne lors d'un contrôle par l'agent de police et d'envoyer automatiquement les empreintes, le film ou la photo vers un fichier adéquat pour vérifier l'identité de la personne.

## Revendications

1. Système d'édition et de gestion de contraventions comprenant :
un dispositif de saisie portable (12) à la disposition de l'agent de police (10) chargé de dresser une contravention à un véhicule en infraction (16),
un support d'informations destiné à être remis au possesseur dudit véhicule et adapté pour y enregistrer les informations relatives audit véhicule qui ont été saisies à partir dudit dispositif de saisie,
des moyens de clippage permettant à l'agent de police de clipper ledit support d'informations sur le bras d'essuie-glace (55), de sorte que ledit support ne soit pas détérioré par la pluie et ne puisse pas être aisément retiré après avoir été clippé,
un dispositif de consultation (18) disposant d'un écran d'affichage, d'une imprimante et d'un moyen de lecture dudit support d'informations de façon à permettre au possesseur du véhicule de prendre connaissance et de faire imprimer les informations relatives à l'infraction affichées sur ledit écran d'affichage,
un centre de traitement (22) contenant les informations relatives à tous les véhicules en circulation,
des moyens de transmission par liaison hertzienne (20) se trouvant dans ledit dispositif de saisie pour permettre à l'agent de police d'obtenir lesdites informations relatives au véhicule en infraction à partir dudit centre de traitement ;
ledit système étant **caractérisé en ce que**
ledit dispositif de saisie portable comprend des moyens à reconnaissance vocale et/ou un écran tactile et/ou un clavier virtuel pour que l'agent de police puisse enregistrer les informations relatives au véhicule, et
ledit support d'informations est une carte à puce sans contact inaltérable et infalsifiable (14) et adaptée pour être présentée devant ledit dispositif de saisie de façon à y enregistrer lesdites informations relatives au véhicule.

2. Système selon la revendication 1, dans lequel ledit dispositif de consultation (18) est en même temps un dispositif d'encaissement permettant au possesseur du véhicule d'effectuer le règlement de la contravention dont les informations relatives à l'infraction ont été enregistrées dans la carte de contravention (14).

3. Système selon la revendication 1 ou 2, comprenant en outre un fichier d'attente (24) destiné à enregistrer les informations transmises par ledit terminal d'acquisition de données pendant une période de temps prédéterminée avant de les traiter.

4. Système selon l'une des revendications 1, 2 ou 3, dans lequel ledit centre de traitement (22) a un accès automatique au fichier des cartes grises de sorte que ledit dispositif de saisie (12) reçoit immédiatement l'information que le véhicule a été volé si c'est le cas en réponse à la transmission du numéro d'immatriculation du véhicule par ledit dispositif de saisie.

5. Système selon l'une des revendications précédentes dans lequel ledit dispositif de saisie (12) comprend une mini-caméra permettant de filmer ou de photographier le conducteur du véhicule et de transmettre la photo audit centre de traitement (22) de manière à obtenir en réponse l'identification dudit conducteur.

6. Système selon l'une des revendications 1 à 5, dans lequel les moyens de clippage du support d'informations (14) sont constitués d'un orifice (50) prolongé d'une fente (52) terminée sur le bord du support par une découpe spéciale (54) permettant d'insérer le bras d'essuie-glace (55) dans la fente jusqu'à le faire pénétrer dans ledit orifice.

7. Système selon la revendication 6, dans lequel une encoche (56) située dans ledit orifice (50) constitue une zone de faiblesse permettant de pouvoir séparer ladite carte de contravention (14) du bras d'essuie-glace, (70) en tirant fortement sur ladite carte pour la déchirer à partir de ladite encoche.

8. Système selon l'une des revendications 1 à 5, dans lequel lesdits moyens de clippage du support d'informations (14) sont constitués d'une partie en forme de flèche (64) comportant une pointe (66) et deux barbillons (68), et d'une fente (62) en V triangulaire permettant l'introduction de ladite partie en forme de flèche dans ladite fente après que le bras d'essuie-glace (55) a été introduit dans un orifice arrondi (60) délimité par ladite partie en forme de flèche.

9. Système selon la revendication 8, dans lequel une partie charnière (74) reliant la partie en forme de flèche (64) au reste du support d'informations est une zone de faiblesse permettant de pouvoir séparer ledit support (14) du bras d'essuie-glace (55) en tirant fortement sur ledit support pour la déchirer à l'endroit de ladite partie charnière.

## Claims

1. A system for issuing and managing offence tickets comprising:
a portable input device (12) provided to the police officer (10) in charge of ticketing a contravening vehicle (16),
an information medium designed to be issued to the owner of said vehicle and adapted to record theron the vehicle-related data entered using said input device,
clipping means enabling the police officer to clip said information medium onto the windshield wiper arm (55), such that said information medium is not damaged by rain and cannot be easily removed after having been clipped,
a consultation device (18) provided with a display screen, a printer and a means for reading said information medium in order to enable the vehicle owner to print the information relative to the offence displayed on said display screen,
a processing center (22) containing information relative to all registered vehicles,
microwave link transmission means (20) located in said input device to enable the police officer to obtain information concerning the contravening vehicle from the processing center;
said system being **characterized in that**
said portable input device comprises voice recognition means and/or a touch sceen and/or a virtual keyboard so that the police officer may register the information relative to the vehicle, and
said information medium is an inalterable and temper-resistant contactless smart card (14) and adapted to be presented in front of said portable input device in order to register therein said information relative to the vehicle.

2. The system according to claim 1 in which said consultation device (18) is at the same time a payment device enabling the vehicle owner to pay the fine, the information relative to which were recorded in the information medium (14).

3. The system according to claim 1 or 2, further including a follow-up file (24) designed to record the information transmitted by said data acquisition terminal during a predetermined time prior to process it.

4. The system according to any one of claims 1, 2 or 3, in which said processing center (22) has automatic access to the vehicle registration file so that said input device (12) immediately receives the information indicating whether the vehicle is stolen in answer to the transmission of the vehicle license number by said input device.

5. The system according to any one of the previous claims in which said input device (12) includes a miniature camera enabling the driver of the vehicle to be filmed or photographed and to transmit the photo to said processing center (22) in order to obtain the identification of said driver in return.

6. The system according to any one of claims 1 to 5 in which the clipping means of the information medium (14) consist of an opening (50) prolonged by a slot (52) terminated on the edge of the information medium by a special notch (54) enabling the wiper arm (55) to be inserted into the slot until it penetrates said opening.

7. The system according to claim 6, in which a notch (56) located in said opening (50) forms a frangible zone enabling said information medium (14) to be separated from the windshield wiper arm (70) by pulling firmly on said medium in order to rip it starting from said notch.

8. The system according to any one of claims 1 to 5, in which said clipping means of the information medium (14) consist of an arrow-shaped part (64) comprising a point (66) and two barbs (68), and a triangular V-shaped slot (62) enabling said arrow-shaped part to be inserted into said slot once the windshield wiper arm (55) has been introduced into a rounded opening (60) delimited by said arrow-shaped part.

9. The system according to claim 8, in which a hinge part (74) connecting the arrow-shaped part (64) to the rest of the information medium is a frangible zone enabling said information medium (14) to be separated from the windshield wiper arm (55) by pulling firmly on said information medium in order to rip it in the location of said hinge part.

## Patentansprüche

1. System zum Erstellen und Verwalten von Verwarnungen, umfassend:
Eine tragbare Eingabevorrichtung (12) die dem Polizeibeamten (10) zur Verfügung steht, der damit beauftragt ist, einem Fahrzeug (16) bei einer Verkehrswidrigkeit eine Verwarnung auszustellen,
ein Informationsträger der dazu bestimmt ist, dem Besitzer des besagten Fahrzeugs übergeben zu werden und dafür ausgelegt, um darauf die Informationen des betreffenden Fahrzeugs aufzuzeichnen, die über die besagte Eingabevorrichtung eingegeben wurden,
Mittel zum Verklinken die es dem Polizeibeamten ermöglichen, den besagten Informationsträger an den Scheibenwischerarm zu befestigen, damit dieser nicht vom Regen beschädigt wird und nach dem Verklinken nicht einfach abgenommen werden kann,
eine Abfragevorrichtung (18) die über einen Bildschirm, einen Drucker und eine Lesemöglichkeit des besagten Informationsträgers verfügt, sodass der Fahrzeugbesitzer die auf dem besagten Bildschirm angezeigten Information bezüglich der Verkehrswidrigkeit zur Kenntnis nehmen und ausdrucken lassen kann,
ein Bearbeitungszentrum (22), das die Informationen über alle zugelassenen Fahrzeuge besitzt,
Mittel zur Funkübertragung (20), das sich in der besagten Eingabevorrichtung befindet, um es dem Polizeibeamten zu ermöglichen, die besagten Informationen über das Fahrzeug mit verkehrswidrigem Verhalten vom besagten Bearbeitungszentrum zu erhalten;
Das besagte System ist **gekennzeichnet dadurch, dass**
die besagte tragbare Eingabevorrichtung ein Mittel der Spracherkennung und/oder einen Tastbildschirm und/oder eine virtuelle Tastatur enthält, damit der Polizeibeamte die Informationen über das Fahrzeug speichern kann, und
der besagte Informationsträger ist eine unzerstörbare und unfälschbare, kontaktlose Chipkarte (14) und dafür ausgelegt, vor die besagte Eingabevorrichtung gehalten zu werden, um dort die besagten Informationen über das Fahrzeug aufzuzeichnen.

2. System nach Anspruch 1, bei dem die besagte Abfragevorrichtung (18) gleichzeitig eine Einzahlungsvorrichtung ist, die es dem Besitzer des Fahrzeugs ermöglicht, die Bezahlung der Verwarnung vorzunehmen, von welcher die Informationen über die Verkehrswidrigkeit in der Verwarnungskarte (14) aufgezeichnet wurden.

3. System nach Anspruch 1 oder 2, welches außerdem eine Folgedatei umfasst (24), die dazu bestimmt ist, die Informationen, die von dem Datenerfassungsterminal während eines vorbestimmten Zeitraums übertragen wurden, aufzuzeichnen, bevor sie bearbeitet werden.

4. System nach einem der Ansprüche 1, 2 oder 3, bei welchem das besagte Bearbeitungszentrum (22) einen automatischen Zugriff zur Datei der KFZ-Zulassungen hat, sodass die besagte Eingabevorrichtung (12) sofort die Information erhält, dass das Fahrzeug gestohlen wurde, sollte dies der Fall sein, als Antwort auf die Übermittlung des KFZ-Kennzeichens mittels der besagten Eingabevorrichtung.

5. System nach einem der vorigen Ansprüche bei dem die Eingabevorrichtung (12) eine Minikamera umfasst, mit welcher der Fahrer des Fahrzeugs gefilmt oder fotografiert werden und das Foto an das besagte Bearbeitungszentrum (22) übermittelt werden kann, um daraufhin die Identifizierung des besagten Fahrers zu erhalten.

6. System nach einem der Ansprüche 1 bis 5, bei dem die Mittel zum Verklinken des Informationsträgers (14) aus einer Öffnung (50) bestehen, die durch einen Schlitz (52) verlängert ist, der am Rand des Trägers mit einem speziellen Einschnitt (54) endet, der das Einschieben des Scheibenwischerarms (55) in den Schlitz ermöglicht, bis er sich in der besagte Öffnung befindet.

7. System nach Anspruch 6, bei welchem eine Einkerbung (56) in der besagten Öffnung (50) eine Schwachstelle darstellt die es ermöglicht, die besagte Verwarnungskarte (14) vom Scheibenwischerarm (70) abzutrennen, indem stark an der besagten Karte gezogen wird, um sie von der besagten Einkerbung aus zu zerreissen.

8. System nach einem der Ansprüche 1 bis 5, bei welchem die besagten Mittel zum Verklinken des Informationsträgers (14) aus einem Teil in Pfeilform bestehen (64) mit einer Spitze (66) und zwei Widerhaken (68), und einem V-förmigen Schlitz (62) der die Einführung des besagten Teils in Pfeilform in den besagten Schlitz ermöglicht, nachdem der Scheibenwischerarm (55) in eine abgerundete Öffnung (60) eingeschoben wurde, die durch den besagten Teil in Pfeilform begrenzt wird.

9. System nach Anspruch 8, bei welchem ein Verbindungsteil (74), der den Teil in Pfeilform (64) mit dem restlichen Informationsträger verbindet, eine Schwächezone ist, die es ermöglicht den besagten Träger (14) vom Scheibenwischerarm (55) zu lösen, indem stark am besagten Träger gezogen wird, damit er an der Stelle des besagten Verbindungsteils abreisst.
